# EUROPEAN PATENT APPLICATION

(11) **EP 3 945 476 A1**
(43) Date of publication of application: **02.02.2022**
(21) Application number: 21187907.7
(22) Date of filing: 27.07.2021
(51) Int. Cl.: G06Q 10/02, G06Q 50/30

(54) **METHOD AND SYSTEM FOR RIDE HAILING SERVICE BASED ON NATURAL LANGUAGE INPUT**

(30) Priority: 29.07.2020 CN 202010743209
(71) Applicant: Bayerische Motoren Werke Aktiengesellschaft, 80809 München (DE)
(72) Inventor: Lei, Wenhui, Shanghai, 200126 (CN); Suess, Christian, 85256 Vierkirchen (DE); Pattinson, Joe, Gresham, Norwich, NR11 8AD (GB); Zhang, Laney, Peking, 100076 (CN)

(57) **Abstract**

The invention provides a ride hailing service processing method and system. The system includes: a natural language processing module configured to: process a ride hailing service request message in the form of natural language received from a user into ride hailing information in the form of structured data; and a dialogue module configured to: determine whether the ride hailing information contains all necessary information required to reserve a ride hailing service; generate, if it is determined that the ride hailing information lacks one or more pieces of the necessary information required to reserve a ride hailing service, a dialog sent to the user to obtain the missing one or more pieces of the necessary information; send, if it is determined that the ride hailing information contains all necessary information required for reserving a ride hailing service, the ride hailing information to a service platform; and generate, based on the ride hailing service confirmation result returned by the service platform, a dialog sent to the user to inform the user of the ride hailing service confirmation result.

## Description

### TECHNICAL FIELD

The present invention relates to the field of cars, and more specifically, to a method and system for ride hailing service based on natural language input.

### BACKGROUND

In recent years, the scale of the car rental market has been expanding. Especially with the heating up of the sharing economy, the types of short-term car rental services have also been enriched, including but not limited to taxis, special cars, ridesharing, and shared cars. These services have been generally integrated in various Internet-based ride-hailing platforms, such as Didi, Uber, Shenzhou, etc. Users can use mobile terminals to request a car in real time or reserve a car through the mobile client provided by each platform.

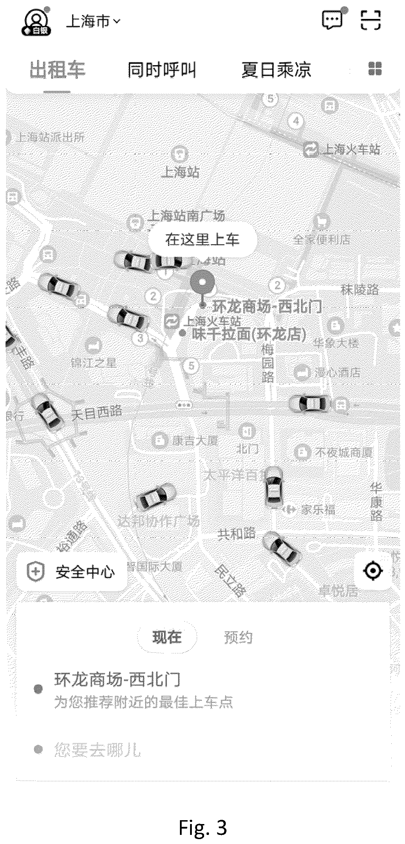

However, the current clients of various car hailing platforms that provide ride hailing services generally require users to manually input their departure points and destinations. Typically, as shown in Fig. 3, at least two fields for pick-up point and destination are provided in the ride hailing interface of various ride hailing clients. The user needs to input the pick-up point and destination by manually typing texts or via voice input or by selecting points on the map. In addition, if the user wants to use a car reservation service, further inputting the desired time for the car reservation is required. This may be cumbersome for some users, such as those who are relatively not good at performing various operations on mobile devices, and those who are still unfamiliar with newly installed clients.

Therefore, a more convenient and smarter way to provide ride hailing services is desired.

### SUMMARY

The summary of the invention is provided to introduce some concepts that will be further described in the following specific embodiments in a simplified form. This summary is not intended to identify key features or essential features of the claimed subject matter, nor is it intended to be used to help determine the scope of the claimed subject matter.

According to an embodiment of the present invention, a ride hailing service processing system is provided, including:
a natural language processing module configured to:
process a ride hailing service request message in the form of natural language received from a user into ride hailing information in the form of structured data; and a dialogue module configured to:
determine whether the ride hailing information contains all necessary information required to book a ride hailing service;
generate, if it is determined that the ride hailing information lacks one or more pieces of the necessary information required to book a ride hailing service, a dialog sent to the user to obtain the missing one or more pieces of the necessary information;
send, if it is determined that the ride hailing information contains all necessary information required for booking ride hailing service, the ride hailing information to a service platform; and
generate, based on the ride hailing service confirmation result returned by the service platform, a dialog sent to the user to inform the user of the ride hailing service confirmation result.

According to one embodiment of the invention, wherein the natural language processing module is further configured to: convert the ride hailing service request message from the user in the form of voice into text.

According to a further embodiment of the invention, wherein the system further comprises: a user profile module configured to store user profiles for each user.

According to a further embodiment of the invention, wherein the dialogue module is further configured to: refine, before determining whether the ride hailing information contains all necessary information required to book a ride hailing service, one or more pieces of information in the ride hailing information based on the user profile.

According to a further embodiment of the invention, wherein the user profile module is further configured to create user portraits for the users, and the user portraits include one or more user categories classified based on ride hailing habits.

According to a further embodiment of the invention, wherein the dialogue module is further configured to: generate, based on one or both of the user profiles and the user portraits, a dialog sent to the user to provide the user with recommendations for additional ride hailing information other than the necessary information.

According to another aspect of the invention, a method for processing ride hailing service is provided, wherein the method comprises:
receiving a ride hailing service request message in the form of natural language received from a user;
processing the received ride hailing service request message into ride hailing information in the form of structured data;
determining whether the ride hailing information contains all necessary information required to book a ride hailing service;
generating, if it is determined that the ride hailing information lacks one or more pieces of the necessary information required to book a ride hailing service, a dialog sent to the user to obtain the missing one or more pieces of the necessary information;
sending, if it is determined that the ride hailing information contains all necessary information required for booking ride hailing service, the ride hailing information to a service platform; and
generating, based on the ride hailing service confirmation result returned by the service platform, a dialog sent to the user to inform the user of the ride hailing service confirmation result.

According to one embodiment of the invention, wherein processing the received ride hailing service request message into ride hailing information in the form of structured data further comprises: converting the ride hailing service request message from the user in the form of voice into text.

According to a further embodiment of the invention, wherein the method further comprises: refining, before determining whether the ride hailing information contains all necessary information required to book a ride hailing service, one or more pieces of information in the ride hailing information based on the user profile.

According to a further embodiment of the invention, wherein the method further comprises: generating, based on one or both of the user profiles and the user portraits, a dialog sent to the user to provide the user with recommendations for additional ride hailing information other than the necessary information, wherein the user portraits include one or more user categories classified based on ride hailing habits.

According to a further embodiment of the invention, wherein the method further comprises: generating, based on available service options provided by service providers, a dialog sent to the user to ask the user or provide recommendations for options not mentioned in the current ride hailing information.

According to a further embodiment of the invention, wherein determining whether the ride hailing information contains all necessary information required to book a ride hailing service further comprises: determining whether the ride hailing information includes one or more pieces of inaccurate information; and generating, if it is determined that the ride hailing information includes one or more pieces of inaccurate information, a dialog sent to the user to ask the user the accurate meaning of the one or more pieces of inaccurate information.

According to a further embodiment of the invention, wherein the method further comprises: training a semantic understanding engine for ride hailing service scenario, wherein the semantic understanding engine is used to process the received ride hailing service request message into ride hailing service information in the form of structured data.

According to a further embodiment of the invention, wherein training a semantic understanding engine for ride hailing service scenario further comprises:
defining a plurality of fields for the structured data related to the ride hailing service scenario;
collecting training corpus from a plurality of different users, wherein each of the training corpus is a natural language expression by a user on his intention on ride hailing, and the natural language expression includes at least some of the fields; and
using the collected training corpus to train the semantic understanding engine through a machine learning algorithm.

According to a further embodiment of the invention, wherein the dialogs with the user are conducted in a universal messaging application.

In view of the problems in the prior art, the present invention provides a method and system for ride hailing service based on natural language input, which has at least the following advantages compared with the prior art:
1. users can use natural language throughout the entire process to make ride railing service reservations, which simplifies relevant operating procedures;
2. the ride railing service reservation process can be conducted in a dialog manner in the messaging applications that users daily use, without the need to install particular applications, and without additional learning costs; and
3. it can provide smarter and more personalized ride hailing services and recommendations for different users, improving user experience and satisfaction.

These and other features and advantages will become apparent by reading the following detailed description and referring to the associated drawings. It should be understood that the foregoing general description and the following detailed description are only illustrative, and will not limit the claimed aspects.

### BRIEF DESCRIPTION OF THE DRAWINGS

In order to understand in detail the manner in which the above-mentioned features of the present invention are used, the content briefly summarized above may be described in more detail with reference to various embodiments, some of which are shown in the accompanying drawings. It should be noted, however, that the drawings only show some typical aspects of the present invention, and should not be considered as limiting its scope, because the description may allow other equally effective aspects.
Fig. 1 is a schematic diagram of the architecture of a ride hailing service system according to an embodiment of the present invention.
Fig. 2 is a schematic flowchart of a method for processing ride hailing service according to an embodiment of the present invention
Fig. 3 is a ride hailing reservation interface of a ride hailing application in prior art.

### DETAILED DESCRIPTION

The present invention will be described in detail below in conjunction with the accompanying drawings, and the features of the present invention will be further revealed in the following detailed description.

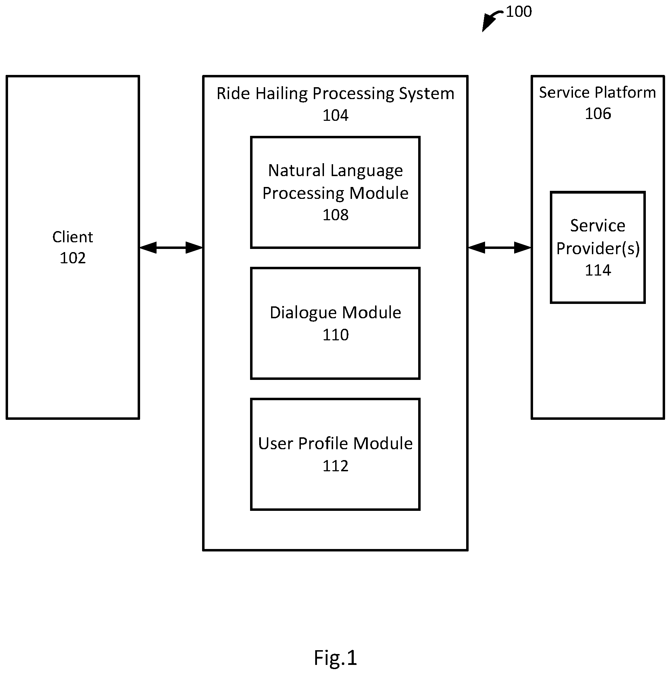

Fig. 1 is a schematic diagram of the architecture of a ride hailing service system 100 according to an embodiment of the present invention. As shown in FIG. 1, the ride railing service system 100 can be composed of a client 102, a ride hailing processing system 104 and a service platform 106.

The client 102 may be configured to receive a ride hailing request message from a user. As an example, the client 102 may be implemented as an application on the user's mobile device. Preferably, the client 102 may be implemented in a general messaging application (such as a WeChat official account or a WeChat applet), thereby allowing the user to send a ride hailing request message to the ride hailing processing system 104 in the form of messaging. Different from traditional ride hailing operations in existing ride hailing, the ride hailing reservation manner provided by the present invention does not require the user to provide the information needed for ride hailing reservation (including pick-up point, destination and reservation time) through troublesome manners such as drop-down menus or selecting positions. Instead, the ride hailing reservation can be completed in the form of dialogues through natural languages. For example, a user can directly send a message such as "I need a car to go to the Shanghai Museum from the Bund at 3 PM" in the messaging interface of WeChat just like chatting with a friend. This message can be input by the user through text input and sent to the ride hailing processing system 104 in form of text, or input by the user through voice input and sent to the ride hailing processing system 104 in form of voice. Likewise, through this messaging interface, the user can receive a ride hailing confirmation message from the ride hailing processing system 104 or other messages regarding further details of the ride hailing. According to an embodiment of the present invention, in addition to the natural language text or voice input by the user, the ride hailing request message may also include other related information, including but not limited to user ID, location information, session ID, and so on.

The ride hailing processing system 104 is configured to receive the ride hailing request message from the client 102, process it into a service request and send it to service providers 106. According to an embodiment of the present invention, the ride hailing processing system 104 may include a natural language processing module 108 and a dialogue module 110.

The natural language processing module 108 is used to process the ride hailing request message received from the client 102. As mentioned before, the ride hailing request message is a message input by the user in the form of natural languages. If the message is provided in the form of voice, the natural language processing module 108 may convert the voice into text through various voice recognition technologies.

The natural language processing module 108 may be further configured to process the text message into structured data to extract from the message information related to the ride hailing (hereinafter referred to as "ride hailing information"). More specifically, following the example mentioned before, assuming that the natural language processing module 108 receives the message "I need a car to go to the Shanghai Museum from the Bund at 3 PM" from the client 102, the following information can be extracted from the message :
Ride Hailing Person: I
Ride Hailing Time: 3 PM
Departure Point: the Bund
Destination: the Shanghai Museum

After the natural language processing module 108 processes the user's natural language message into structured ride hailing information, the ride hailing information is provided to the dialogue module 110. The dialogue module 110 may be configured to generate a dialogue with the user and send the collected ride hailing information to the service platform 106.

The dialogue module 110 can firstly further automatically refine the ride hailing information. For example, through the user ID bound to the client, the ride hailing person "I" can be replaced with the corresponding user; the ride hailing time "3 PM" can be automatically refined to 3PM on March 17, 2019 based on the system clock (assuming that the day is March 17, 2019); the departure point "the Bund" can be completed as "the Bund in Shanghai" based on the user's location information; and so on.

Subsequently, the dialogue module 110 can, by referring to a predefined ride hailing information table, check whether the ride hailing message already contains all necessary information required to reserve a ride hailing. For example, generally speaking, ride hailing person, ride hailing time, departure point and destination are necessary information for a single ride hailing. According to an embodiment of the present invention, if all necessary information has been included, a dialog for the user can be generated to inform the user that the ride hailing has been received and is waiting for confirmation from the service provider, for example, "Okay, arrangements are being made for you!" At the same time, relevant ride hailing information is sent to the service platform 106. Alternatively, the dialogue module 110 may also first send the relevant ride hailing information to the service platform 106, and wait until the service platform 106 returns the confirmation result, and then generate the dialogue for the user to directly inform the user of the ride hailing reservation result, such as "Okay, we have arranged a vehicle for you from the Bund to the Shanghai Museum at 3 o'clock. The vehicle information is..., Wish you a happy ride!" or "Sorry, we can't arrange a vehicle at the time you reserved. Do you need to change your appointment for another time?", and so on.

If one or more pieces of necessary information are missing in the received message, or the information is inaccurate, the dialog module 110 may generate a dialog to ask the user about the missing or inaccurate information. For example, if there is no clear ride railing time in the received message, the dialogue module 110 may generate a dialogue such as "What time would you like to reserve a car to pick you up?". In addition, as in the above-mentioned example, the information of the departure point or the destination may not be accurate enough. For example, "the Bund" has a relatively broad range and the specific pick-up location is not clear. The dialogue module 110 can thus query the possible pick-up location, for example, given that there are two locations in the system: "Visitor Center of the Bund" and "Pujiang Tour Pier of the Bund", a dialogue of "Would you like to pick you up at Visitor Center of the Bund or at Pujiang Tour Pier of the Bund, or somewhere else?" can be generated.

In addition, in addition to necessary ride hailing information, the ride hailing information table can further include a plurality of additional ride hailing information, including but not limited to: vehicle type (such as sedan, SUV, MPV, etc.), model (such as BMW 7 series, BMW 5 series, BMW X5, Mini Copper, etc.), in-car facilities (such as whether safety seats, umbrellas, drinking water, chargers, in-car Wi-Fi or the like are provided), and so on. Correspondingly, the dialogue module 110 further generates a dialogue about these additional information, such as "What car model do you prefer? We can arrange you with...".

As an optional embodiment, the ride hailing processing system 104 may further include a user profile module 112. The user profile module 112 may store a user profile of each user, and the user profile may include, for example, personal information, ride hailing preferences, and the like. Such information can be obtained by the user registering in the client, such as the user's name, gender, mobile phone number, frequently used address, preferred car model, occupation, income, self-owned vehicle, and so on. In addition, ride hailing preferences can also be automatically generated and updated based on the user's historical ride hailing records. For example, a user always makes a reservation for a BMW 5 Series sedan, then the user's preferred car model can be generated as BMW 5 Series sedans. Further, the user profile module 112 can also create user portraits for users, so as to facilitate more customized recommendations for users with similar ride hailing habits. For example, categories for user portraits may include, but are not limited to: business reception, family outing, sports enthusiasts, and so on.

Correspondingly, the dialog module 110 can interact with the user profile module 112 to obtain relevant information when refining the ride hailing information, checking ride hailing information and generating corresponding dialogs.

For example, in the step of refining the ride hailing information, the dialogue module 110 may send the user ID to the user profile module 112 to retrieve the user's identity information. In another example, when the starting point or destination in the ride hailing information is an abbreviation such as "home" or "company", the dialogue module 110 can retrieve the corresponding specific addresses by querying the user profile module 112. In addition, when generating a dialogue for the additional information, the dialogue module 110 may query the user profile module 112 for user preference or user portrait to provide recommendations for the user. For example, for users classified as the user portrait category of "business reception", BMW 7 Series or 5 Series sedans suitable for business reception may be recommended, for users classified as the "family outing" category, cars equipped with "safety seats" may be recommended, while for users classified as the "sports enthusiasts" category, SUVs or BMW M series sports coupes may be recommended.

After the dialog generated by the dialog module 110 is sent to the user, the user may further provide corresponding information in the form of a dialog. This information is again sent to the ride hailing processing system 104 in the form of a natural language message, and is processed by the natural language processing module 108 and then provided to the dialogue module 110. After the dialogue module 110 collects all relevant ride hailing information, it can send these ride hailing information to the service platform 106.

The service platform 106 may include one or more service providers 114. The service provider(s) 114 is responsible for specifically undertaking related ride hailing. After receiving the ride hailing information from the ride hailing processing system 104, the service provider(s) 114 determines whether the ride hailing service can be undertaken and returns a corresponding confirmation result via the service platform 106, for example, the service can be provided or the service cannot be provided. As an optional example, in the case that the service cannot be provided, the service provider(s) 114 may further provide other possible options for providing the service (for example, a different time (such as 30 minutes in advance or later), changing to a different car model, etc.).

As another optional example, in order to make the entire ride hailing reservation process more efficient and improve user experience, the service provider 114 may maintain various details of available services and provide them to the ride hailing processing system 104 on a regular basis. For example, the service provider(s) 114 can provide changes in car models, changes in additional services (for example, airport pick-up/drop-off service is available, foreign language reception service is available, etc.), and the like. After the updated information is provided to the ride hailing processing system 104, the dialogue module 110 can make use of such information to provide more satisfactory recommendations to the user in the form of dialogue.

After the service platform 106 returns the service confirmation result, the dialogue module 110 of the ride hailing processing system 104 sends it to the client 102 still in the form of dialogue to inform the user of the service confirmation result. It is worth noting that from the user's point of view, the entire ride hailing reservation process is completed in the form of natural language dialogue. In the case of using voice input, the entire process can even be completed through voice communication.

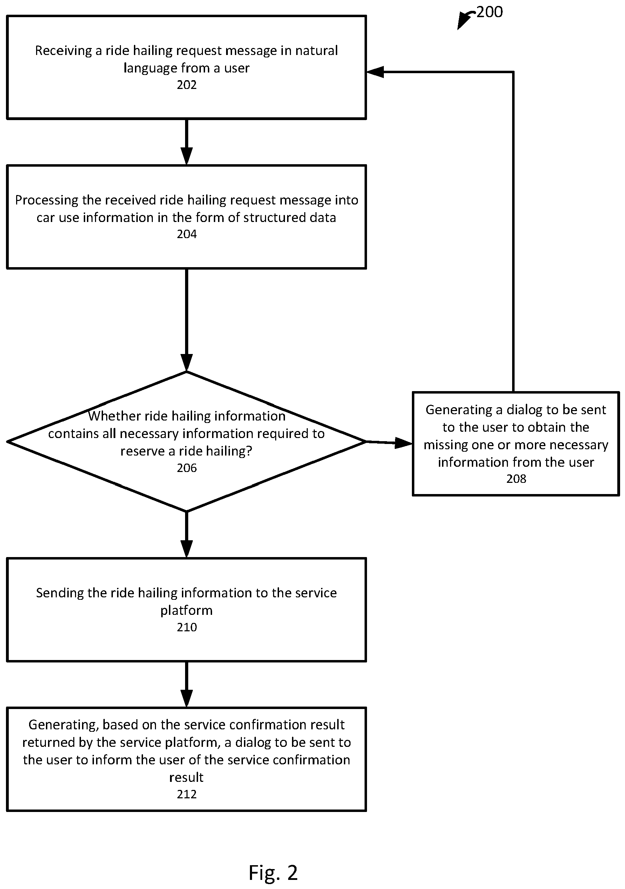

Fig. 2 is a schematic flowchart of a method 200 for processing ride hailing service according to an embodiment of the present invention. As an example, the method 200 may be implemented by the ride hailing processing system 104 in FIG. 1.

The method 200 starts at step 202, receiving a ride hailing request message in natural language from a user. As mentioned before, the solution provided by the present invention does not require the user to provide the information required for ride hailing reservation through cumbersome manners such as drop-down menus and selection of positioning. Instead, the ride hailing reservation can be completed in a dialogue manner through natural language. For example, a message such as "I need a car to go to the Shanghai Museum from the Bund at 3 PM" may be received, which was sent by a user directly in the messaging interface of WeChat. This message can be either in text form or in voice form.

In step 204, the received ride hailing request message is processed into car use information in the form of structured data. As an example, this step can be performed by the natural language processing module 108 of the ride hailing processing system 104 in FIG. 1. As mentioned earlier, if the ride hailing request message is provided in voice form, the voice can be converted into text through various voice recognition technologies.

In order to convert natural language into structured data, any existing natural language processing technologies can be used, and on this basis, special adaptation can be performed for the application scenarios of the present invention. More specifically, a semantic understanding engine for ride hailing scenarios can be trained based on rules and machine learning algorithms. For example, in order to enable the machine to more accurately understand the user's intention and extract therefrom correct information related to ride hailing, relevant rules can be defined first. For example, a user service request message corpus can be established in advance and specific fields to be included in the ride hailing related information can be defined. As an example, a plurality of users may be invited to express their intentions for ride hailing, for example, they may be asked to express what they would say when they are ride hailing in their own customary ways. It can be understood that the greater the number of users, the richer their respective identities, experiences, and backgrounds will be, and the different forms of expressions collected for the same ride hailing intention will also be richer, which will greatly help to improve the accuracy of understanding. The setting of fields helps to convert natural language into structured data, and also simplifies the complexity of the semantic understanding process of the machine. Subsequently, through the set rules and the established training corpus, a semantic understanding engine for ride hailing scenarios can be trained. This training process can use any suitable machine training methods, such as neural network-based training methods and so on.

In step 206, it is determined whether the ride hailing information contains all necessary information required to reserve a ride hailing. For example, as mentioned before, it can check against a predefined ride hailing information table whether the ride hailing message contains all the necessary information required to reserve a ride hailing, including but not limited to ride hailing person, ride hailing time, departure point and destination.

As an optional example, sometimes the information extracted from the user's natural language may be inaccurate, so the inaccurate information can be refined prior to the determination step. For example, the ride hailing person "I" can be refined as the corresponding real name of the user. In addition, some information can also be refined based on the user profile and/or user portrait, for example, the "company" in the departure point or the destination can be refined as the specific address of the company provided by the user.

If it is determined in step 206 that one or more necessary information required to reserve a ride hailing is missing in the ride hailing information, the method proceeds to step 208, generating a dialog to be sent to the user to obtain the missing one or more necessary information from the user. In addition, some inaccurate information can also be considered as missing of such information. For example, the user's message mentions "company", but the company's address is not recorded in the user's profile. In this case, it is also necessary to further ask the user.

Thereafter, the method returns to step 202, receiving natural language message from the user again and processing the natural language message, and then determining again whether all necessary information is included. Until it is determined that the ride hailing information contains all the necessary information required to reserve the ride hailing, the method proceeds to step 210, sending the ride hailing information to the service platform. The service platform can further issue the ride hailing information to one or more cooperative ride hailing service providers. Alternatively or additionally, prior to sending the necessary ride hailing information to the ride hailing service provider, a dialogue to be sent to the user may be generated based on the user profile and/or user profile, so as to provide the user with recommendations of additional ride hailing information in addition to the necessary information. For example, in the case that the user does not mention selected car model or in-car facilities, recommendations for these aspects can be provided to the user. Optionally, as mentioned before, the service platform can provide the ride hailing processing system with the latest service information that service provider(s) can provide, such as various options for the user to choose from, and therefore it can further ask or recommend to the user about these options (especially those options that are not mentioned in the current ride hailing information provided by the user). Eventually, the user's feedback information for these recommended services is sent to the service platform together with the previous ride hailing information.

In step 212, based on the service confirmation result returned by the service platform, a dialog to be sent to the user is generated to inform the user of the service confirmation result, such as "Your reservation is successful." or "Sorry, there is no available vehicle at the time of your reservation. Do you want to change the ride hailing time?", and so on. Thus, the present ride hailing processing process ends.

What has been described above includes examples of aspects of the claimed subject matter. Of course, it is impossible to describe every conceivable combination of components or methods for the purpose of describing the claimed subject matter, but those of ordinary skill in the art should recognize that there are many further combinations and permutations of the claimed subject matter are all possible. Thus, the disclosed subject matter is intended to cover all such changes, modifications and changes that fall within the spirit and scope of the appended claims.

## Claims

1. A ride hailing service processing system, including:
a natural language processing module configured to:
process a ride hailing service request message in the form of natural language received from a user into ride hailing information in the form of structured data; and a dialogue module configured to:
determine whether the ride hailing information contains all necessary information required to reserve a ride hailing service;
generate, if it is determined that the ride hailing information lacks one or more pieces of the necessary information required to reserve a ride hailing service, a dialog sent to the user to obtain the missing one or more pieces of the necessary information;
send, if it is determined that the ride hailing information contains all necessary information required for reserving a ride hailing service, the ride hailing information to a service platform; and
generate, based on the ride hailing service confirmation result returned by the service platform, a dialog sent to the user to inform the user of the ride hailing service confirmation result.

2. The system of claim 1, wherein the natural language processing module is further configured to:
convert the ride hailing service request message from the user in the form of voice into text.

3. The system of claim 1, wherein the system further comprises:
a user profile module configured to store user profiles for each user.

4. The system of claim 3, wherein the dialogue module is further configured to:
refine, before determining whether the ride hailing information contains all necessary information required to reserve a ride hailing service, one or more pieces of information in the ride hailing information based on the user profile.

5. The system of claim 3, wherein the user profile module is further configured to create user portraits for the users, and the user portraits include one or more user categories classified based on ride hailing habits.

6. The system of claim 5, wherein the dialogue module is further configured to:
generate, based on one or both of the user profiles and the user portraits, a dialog sent to the user to provide the user with recommendations for additional ride hailing information other than the necessary information.

7. A method for processing ride hailing service, wherein the method comprises:
receiving a ride hailing service request message in the form of natural language received from a user;
processing the received ride hailing service request message into ride hailing information in the form of structured data;
determining whether the ride hailing information contains all necessary information required to reserve a ride hailing service;
generating, if it is determined that the ride hailing information lacks one or more pieces of the necessary information required to reserve a ride hailing service, a dialog sent to the user to obtain the missing one or more pieces of the necessary information;
sending, if it is determined that the ride hailing information contains all necessary information required for reserving a ride hailing service, the ride hailing information to a service platform; and
generating, based on the ride hailing service confirmation result returned by the service platform, a dialog sent to the user to inform the user of the ride hailing service confirmation result.

8. The method of claim 7, wherein processing the received ride hailing service request message into ride hailing information in the form of structured data further comprises:
converting the ride hailing service request message from the user in the form of voice into text.

9. The method of claim 7, wherein the method further comprises:
refining, before determining whether the ride hailing information contains all necessary information required to reserve a ride hailing service, one or more pieces of information in the ride hailing information based on the user profile.

10. The method of claim 7, wherein the method further comprises:
generating, based on one or both of the user profiles and the user portraits, a dialog sent to the user to provide the user with recommendations for additional ride hailing information other than the necessary information, wherein the user portraits include one or more user categories classified based on ride hailing habits.

11. The method of claim 7, wherein the method further comprises:
generating, based on available service options provided by service providers, a dialog sent to the user to ask the user or provide recommendations for options not mentioned in the current ride hailing information.

12. The method of claim 7, wherein determining whether the ride hailing information contains all necessary information required to reserve a ride hailing service further comprises:
determining whether the ride hailing information includes one or more pieces of inaccurate information; and
generating, if it is determined that the ride hailing information includes one or more pieces of inaccurate information, a dialog sent to the user to ask the user the accurate meaning of the one or more pieces of inaccurate information.

13. The method of claim 7, wherein the method further comprises:
training a semantic understanding engine for ride hailing service scenario, wherein the semantic understanding engine is used to process the received ride hailing service request message into ride hailing service information in the form of structured data.

14. The method of claim 13, wherein training a semantic understanding engine for ride hailing service scenario further comprises:
defining a plurality of fields for the structured data related to the ride hailing service scenario;
collecting training corpus from a plurality of different users, wherein each of the training corpus is a natural language expression by a user on his intention on ride hailing, and the natural language expression includes at least some of the fields; and
using the collected training corpus to train the semantic understanding engine through a machine learning algorithm.

15. The method of claim 7, wherein the dialogs with the user are conducted in a universal messaging application.
